# EUROPÄISCHE PATENTANMELDUNG

(11) **EP 1 038 464 A2**
(43) Veröffentlichungstag der Anmeldung: **27.09.2000**
(21) Anmeldenummer: 00104589.7
(22) Anmeldetag: 16.03.2000
(51) Int. Cl.: A45B 3/00

(54) **Sonnenschirm**

(30) Priorität: 21.03.1999 DE 19912982
(71) Anmelder: Müller, Hermann-Frank, D-53177 Bonn (DE)
(72) Erfinder: Müller, Hermann-Frank, D-53177 Bonn (DE)

(57) **Zusammenfassung**

Die Erfindung bezieht sich auf einen Sonnenschirm mit auf seiner Oberfläche angebrachten Solarmoduln, mindestens einem Energiespeicher sowie einer Einrichtung zur Energieabnahme. Dabei weist die Sonnenschirmbespannung biegsame Solarzellenstreifen 1a auf, die kabelfrei elektrisch untereinander und mit wenigstens einem Energiespeicher 4 (Batterie, Hochleistungskondensator o. dergl.) verbunden sind, welcher so wie auch die Einrichtung zur Energieabnahme 6 und ein Motor 8 zum Auf- und Zusammenklappen des Sonnenschirmes gegen Umwelteinflüsse geschützt im oder am Sonnenschirm angebracht sind. Der Motor 8 kann manuell oder automatisch betätigt werden. Mehrere Sonnenschirme können durch ein Kabel 10 verbunden werden. Der Schirm kann abnehmbar ausgebildet sein.

## Beschreibung

Die Erfindung bezieht sich auf einen Sonnenschirm mit auf seiner Oberfläche angebrachten Solarmoduln, mindestens einem Energiespeicher sowie einer Einrichtung zur Energieabnahme.

Schirme gibt es in unterschiedlichen Größen für eine Einzelperson bis zu einer Größe für eine Vielzahl Personen zum Schutz gegen Sonne und/oder Regen. Ihr Standort kann - wenn sie nicht getragen werden sollen - z.B. ein Balkon, eine Terrasse, ein Garten, ein Straßencafé, ein Badestrand oder dergleichen sein. Je nachdem, wie weit ein Anschluß für einen evtl. benötigten Energieverbraucher entfernt ist, ist es zweckmäßig, einen Energieerzeuger in unmittelbarer Nähe des Schirmes zu wissen. Hierfür bietet sich die Verwendung von Solarmoduln für eine umweltfreundliche Energieerzeugung an, die an oder auf dem Schirm angebracht sind, wie dies etwa die DE 295 01 583.7 U1 lehrt.

Bei diesem bekannten Sonnenschirm werden die Solarmoduln über Kabel untereinander und mit einer Steckdose für eine Stromabnahme verbunden. Diese Zusammenfassung der Energieerzeugung ist in Herstellung und Montage aufwendig. Auch kann wegen der insgesamt nicht optimalen Ausnutzung der vorhandenen Schirmfläche nicht ausgeschlossen werden, daß die Stromerzeugung bei einer kontinuierlichen Energieabnahme über die mindestens eine Steckdose für manche Verbraucher nicht ausreicht.

Der Erfindung liegt daher die Aufgabe zugrunde, praktisch die gesamte Schirmoberfläche mit Solarmoduln zu belegen und die so gewonnene Energie in bekannter Weise über mindestens einen Energiespeicher ohne größeren Montageaufwand fließen zu lassen, aus dem über eine Steuereinrichtung auch der Strom zum Auf- und Zusammenklappen der Schirmbespannung entnommen werden kann.

Zur Lösung dieser Aufgabe weist die Sonnenschirmbespannung biegsame Solarzellenstreifen auf, die kabelfrei elektrisch untereinander verbunden sind, und ist der Energiespeicher (Batterie, Hochleistungskondensator oder dergleichen) sowie die Einrichtung zur Energieabnahme gegen Umwelteinflüsse geschützt an oder im Sonnenschirm angebracht. Durch die Verwendung von biegsamen Solarzellenstreifen für die Energieerzeugung wird es möglich, die Sonnenschirmbespannung weitgehend aus diesen Solarzellenstreifen selbst herzustellen und so eine vorgegebene Schirmfläche optimal auszufüllen. Dabei ist es im Prinzip nicht allzu erheblich, ob die Schirmfläche kreisförmig oder mehreckig ist, da die Solarzellenstreifen flexibel und unzerbrechlich sind und sich deshalb den räumlichen Gegebenheiten weitgehend anpassen können. Für eine Verbindung der einzelnen Solarzellen untereinander und auch zu einem zugeordneten Energiespeicher können enstelle der Kabel in bekannter Weise gedruckte Schaltungen verwandt werden.

Wenn die Solarzellenstreifen die Schirmbespannung bilden, ist es selbstverständlich erforderlich, daß sie wasserdicht miteinander verbunden (durch Schweißen, Kleben und dergleichen) oder verbindbar ( durch Reißverschluß, Haken mit Ösen und dergleichen, beidseitig abgedeckt oder abdeckbar) sind.

Soll eine Verbindung von zwei nebeneinanderliegenden Solarzellenstreifen trennbar sein, kann es gegebenenfalls erforderlich werden, einen Streifen aus Markisenstoff einzufügen, der auf der einen Seite mit dem Solarzellenstreifen fest verbunden ist und auf der anderen, gegenüberliegenden Seite die trennenden Verbindungselemente (Reißverschlußteil, Haken bzw. Öse und dergleichen) hat. Als Verbindungselement kann auch eine Führungsschiene dienen, an der die angrenzenden Solarzellenstreifen z.B. gegeneinander verschiebbar angebracht sind.

Um die Solarzellen vor Umwelteinflüssen möglichst weitgehend zu schützen, erhalten sie eine nach außen gerichtete, die Energieaufnahme nicht behindernde Schutzschicht, die wasserabweisend ist, die Abnutzung durch Reibeffekte verhindert und Schmutzteilchen weniger Halt gibt. Es bleibt dabei dem Fachmann überlassen, welche Schutzschicht jeweils die wichtigste ist bzw. in welcher Reihenfolge die Schutzschichtanteile aufgetragen werden.

Manchmal kann es aufgrund besonders hoher Außentemperaturen erforderlich sein, die Solarzellenstreifen zu kühlen. Hierfür eignet sich z.B. die Kühlflüssigkeit Galistan. Die Art und Weise, diese Kühlung (z.B. als Umlaufkühlung) vorzunehmen, bleibt dabei dem Fachmann überlassen.

Die Energiespeicher zur Aufnahme der in den Solarzellen erzeugten Energie können - insbesondere in der Form von Hochleistungskondensatoren - im Innern des Schirmständer-Rohres angebracht sein, wobei für einen evtl. erforderlichen Austausch ein zugeordneter Montagedeckel am Schirmständer-Rohr vorgesehen werden kann. Eine gleichartige Anordnung kann auch für die Einrichtung zur Energieabnahme (feuchtigkeitsgeschützte Steckdose) veranlaßt werden. Anstelle des Schirmständer-Rohres können Energiespeicher und/oder Einrichtungen zur Energieabnahme ebenso im Fußsockel des Schirmständers untergebracht werden. Gegebenenfalls findet sich für diesen Zweck auch Platz im Stoffteil der Schirmbespannung bzw. integriert in diesem, in oder an der Tragleiste der Schirmbespannung oder unter der Plastikkappe der Schirmspitze.

Allgemein üblich ist es, einen Sonnenschirm auf- und zusammenzuklappen. Sollen Sonnenschirme in größerer Anzahl und/oder mit größeren Abmessungen betätigt werden, ist dies nicht nur mit einem erheblichen Arbeitsaufwand verbunden, sondern ab einer bestimmten Größe von einer Einzelperson auch nicht mehr zu bewältigen. Es ist deshalb zweckmäßig, für eine derartige Tätigkeit einen Motor vorzusehen, der je nach der erforderlichen Größe - z.B. zusätzlich zu Energiespeicher und Einrichtung zur Energieabnahme - im Schirmständer-Rohr oder in dessen Fußsockel untergebracht werden kann, wo er gleichzeitig zur besseren Standfestigkeit des Sonnenschirmes dient. Die Betätigung des Motors kann durch Fernbedienung erfolgen, etwa über Photozellen oder durch Infrarotstrahlen. Jedoch kann der Motor natürlich auch manuell in Tätigkeit gesetzt werden, wobei ein Betätigen durch unbefugte Personen ausgeschlossen werden kann, wenn zum Autorisieren ein Fingerabdrucksensor von wenigstens einer Person, ein scheckkartenähnlicher Schlüssel oder dergleichen die Berechtigung erteilt.

Aus Sicherheitsgründen gegenüber Witterungseinflüssen wie Regenschauer oder Sturmböen sollten automatisch arbeitende Motorbetätigungen vorgesehen werden, die aufgrund der Angaben eines Regensensors oder eines Windmeßgerätes arbeiten, wobei festzulegen wäre, welche Angaben im Zweifel dominieren sollen.

Gegen abendliche Kühle kann es als vorteilhaft angesehen werden, wenn der Sonnenschirm unterhalb der Solarzellenstreifen eine wärmespeichernde Bespannung aufweist, die die Wärme des Tages in sich aufgenommen hat.

In manchen Fällen wird die durch die Solarzellen erzeugte Energie während des Tages nicht verbraucht. Dann ist es vorteilhaft, wenn die Sonnenschirme über Kabel miteinander verbunden sind, so daß die überschüssige Energie einem Zentralspeicher zugeführt werden kann. Ein weiterer Vorteil dieser Maßnahme besteht in der Möglichkeit, Telefongespräche zu führen.

Ein am Außenrand der Sonnenschirmbespannung herabhängender Volant kann gegebenenfalls für Werbelogos verwendet werden.

Die Erfindung wird an Ausführungsbeispielen beschrieben und dargestellt. Dabei zeigen
- Figur 1: Ansicht eines Sonnenschirms, teilweise geschnitten,
- Figur 2a: Draufsicht auf einen runden Sonnenschirm,
- Figur 2b: Draufsicht auf einen viereckigen Sonnenschirm,
- Figur 3: verschiebbare Verbindung zwischen zwei Solarzellenstreifen.

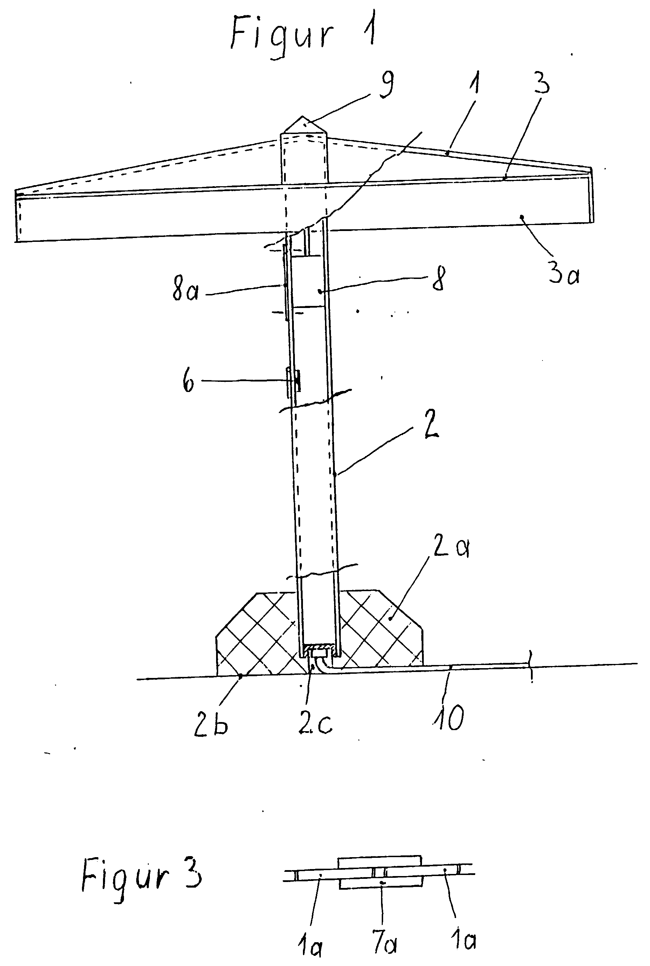

Die Figur 1 zeigt einen Sonnenschirm mit einer Bespannung 1, einem Schirmständer 2 und einem Fußsockel 2a für den Schirmständer 2.

Die Bespannung 1 des Sonnenschirmes besteht im wesentlichen aus biegsamen Solarzellenstreifen 1a, die kabelfrei - z.B. durch eine gedruckte Schaltung - elektrisch untereinander verbunden sind. Die mechanische Verbindung der Solarzellenstreifen 1a miteinander erfolgt beispielsweise abwechselnd fest (durch Kleben, Schweißen und dergleichen) und trennbar (durch Haken/Ösen, Reißverschluß und dergleichen), um einen evtl. notwendigen Austausch nach Beschädigungen zu ermöglichen, wobei eine ergänzende Verwendung von Markisenstoffstreifen 3b erforderlich sein kann. Werden durchsichtige Solarzellen 1b verwendet, so ist es möglich, z.B. zwei oder dreij Solarzellen 1b übereinander anzuordnen und auf diese Weise die Energieerzeugung zu verdoppeln bzw. zu verdreifachen, ohne die Oberfläche vergrößern zu müssen. Diese Maßnahme kann bei einem Sonnenschirm vorteilhaft vor allem dann angewendet werden, wenn die Solarzellen 1b ausreichend dünn sind, so daß es für die Tragleisten 7 der Schirmbespannung keine Gewichtsprobleme gibt. Bei Verwenden von durchsichtigen Solarzellen 1b muß die Schirmbespannung 1 eine abdunkelnde Zusatzbespannung 3 unterhalb der Solarzellenstreifen 1a erhalten, um den Sonnenschirmcharakter zu bewahren. Diese Zusatzbespannung 3 kann als Wärmespeicher für kühle Abendstunden hergerichtet sein oder mittels der gespeicherten Energie hierfür ausgestattet werden.

Da die Solarzellenstreifen 1a die Außenfläche des Schirmes bilden, ist es erforderlich, sie gegen Umwelteinflüsse durch entsprechende Schutzschichten zu schützen, ohne daß dadurch ihre Energieaufnahme behindert wird, so gegen Feuchtigkeit und Wasser und gegen Abnutzung durch Reibeffekte. Eine Schutzschicht, die Schmutzteilchen weniger Halt gibt, ist häufig gleichfalls zweckmäßig. Welche Schutzschichtart dabei im Vordergrund stehen soll, müßte von Fall zu Fall geklärt werden, wenn nicht die Möglichkeit einer Schutzschicht-Kombination vorhanden ist. Entsprechend sind selbstverständlich auch insbesondere die trennbaren Verbindungen nebeneinanderliegender Solarzellenstreifen 1a zu schützen. In Gegenden, wo es temperaturmäßig erforderlich ist, die Solarzellen 1b zu kühlen, können entsprechende, an sich bekannte Kühleinrichtungen hierfür vorgesehen werden, wobei ein bekanntes Kühlmittel Galistan ist.

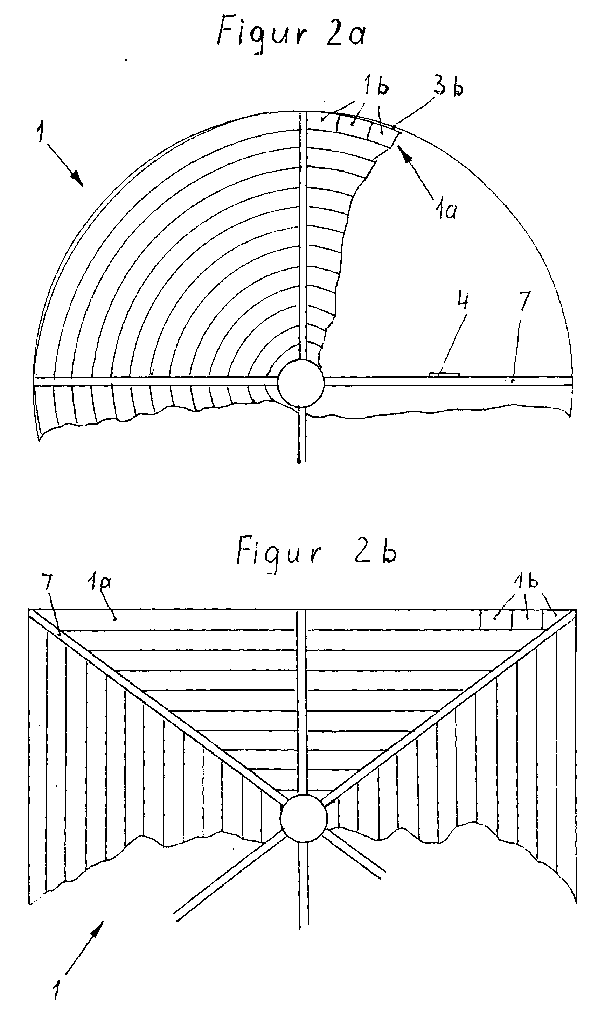

Die Anordnung der Solarzellenstreifen 1a ist - wie in den Figuren 2a und 2b dargestellt - abhängig von der zur Verfügung stehenden Fläche für die Bespannung 1 des Sonnenschirmes sowie deren Form. Eine runde oder ovale Form wird trotz aller Biegsamkeit der Solarzellenstreifen 1a nicht so vollständig durch sie allein herstellbar sein wie eine Mehreck-, insbesondere eine Viereckform, wo weniger Zwischenräume durch ergänzenden Markisenstoff 3b abgedeckt werden müssen. Für eine möglichst günstige Anordnung der Solarzellenstreifen 1a sowie für deren evtl. Austausch bzw. Ersatz können zwischen den Solarzellenstreifen 1a elastische Führungsschienen 7a wasserdicht angebracht sein.

Auch Anzahl und Anordnung der Tragleisten 7 für die Bespannung 1 des Schirmes ist von deren Größe und Form abhängig. Bei einem entsprechend geeigneten Querschnitt der Tragleiste 7 z.B. in Hülsen-, Winkel- oder T-Form können sie ergänzend etwa zur Aufnahme von Energiespeichern 4 herangezogen werden.

Der Schirmständer 2 ist hohl ausgebildet zur Aufnahme eines Motors für das Auf- und Zusammenklappen des Schirmes, von Energiespeichern 4, insbesondere Hochleistungskondensatoren, für die in den Solarzellen 1b erzeugte Energie sowie Einrichtungen zur Energieabgabe 6 (Steckdosen, feuchtigkeits- und staubdicht) für einen Energieverbraucher. Auch der Fußsockel 2a des Schirmständers 2 könnte in seinem Innern Raum für diese Ausrüstungsteile bieten.

Das Auf- und Zusammenklappen des Schirmes durch den Motor 8 kann beispielsweise über ein vom Motor 8 angetriebenes Kegelrad erfolgen, das über weitere Kegelräder und Zahnräder an den Enden der Tragleisten 7 angreift, wobei diese Getriebeanordnung sich z.B. in der Schirmständerhülse 2 oder in einem speziellen Gehäuse an der Spitze des Schirmständers 2 befinden kann.

Das Betätigen des Motors 8 zum Auf- und Zusammenklappen des Schirmes sollte in der Regel nur einem kleinen Personenkreis verantwortlich möglich sein.

Hierfür bieten sich z.B. Fingerabdrucksensoren und scheckkartenähnliche Schlüssel an. Dessen ungeachtet sollte gewährleistet bleiben, in Sonderfällen z.B. über einen Regensensor oder über ein Windmeßgerät den Motor 8 automatisch zu betätigen. Das Betätigen kann dabei über Photozellen oder Infrarotstrahlen beispielsweise in die Wege geleitet werden, die in der Abdeckkappe 9 des Schirmständers 2 ihren Platz finden.

Die von den Solarzellenstreifen 1a erzeugte Energie wird in den meisten Fällen von den unter dem Sonnenschirm sitzenden Personen verbraucht werden. Für den Fall einer überschüssigen Energieerzeugung ist es jedoch zweckmäßig, die Sonnenschirme miteinander über Kabel 10 zu verbinden, die diese Energie dann einem Zentralspeicher zuführen, von dem jedoch auch wieder bei Bedarf Energie abgerufen werden kann. Diese Kabel 10 haben überdies den Vorteil, daß über sie die Möglichkeit besteht, Telefongespräche zu führen. Für den Anschluß des Kabels 10 an den Sonnenschirm kann in der Unterseite 2b vom Fußblock 2a des Schirmständers 2 eine Aussparung 2c mit einem feuchtigkeits- und staubgeschützten Steckdosenanschluß angebracht sein, der elektrisch mit den Energiespeichern 4 der Solarzellenstreifen 1a des betreffenden Sonnenschirmes verbunden ist.

Bei Bedarf kann der Sonnenschirm an seinem Rand einen herabhängenden Volant 3a z.B. aus Markisenstoff aufweisen, der etwa für ein Werbelogo verwendbar ist.

Der vorstehend beschriebene Sonnenschirm muß nicht ortsfest aufgestellt sein. Die Bestandteile Sonnenschirmbespannung 1, Schirmständer 2 und Fußsockel 2a können über im Ergebnis einfache Steckverbindungen montiert werden, die bei einer Demontage an ihren freien Enden mit kappenähnlichen Teilen abgedeckt werden.

## Patentansprüche

1. Sonnenschirm mit auf seiner Oberfläche angeordneten Solarmoduln, mindestens einem Energiespeicher sowie einer Einrichtung zur Energieabnahme,
dadurch gekennzeichnet,
daß die Sonnenschirmbespannung (1) biegsame Solarzellenstreifen (1a) aufweist, die kabelfrei elektrisch untereinander verbunden sind, und
daß mindestens ein Energiespeicher (Batterie, Hochleistungskondensator o.dergl.) (4) sowie eine Einrichtung zur Energieabnahme (6) gegen Umwelteinflüsse geschützt im oder am Sonnenschirm angebracht sind.

2. Sonnenschirm nach Anspruch 1,
dadurch gekennzeichnet,
daß die Solarzellenstreifen (1a) als kreisförmige Schirmbespannung (1) radial oder kreisförmig angebracht sind.

3. Sonnenschirm nach Anspruch 1,
dadurch gekennzeichnet,
daß die Solarzellenstreifen (1a) als drei- oder mehreckige Schirmbespannung (1) parallel oder senkrecht zu den Umfangskanten angebracht sind.

4. Sonnenschirm nach mindestens einem der Ansprüche 1 bis 3,
dadurch gekennzeichnet,
daß die Solarzellen (1b) der Solarzellenstreifen (1a) durch eine gedruckte Schaltung o. dgl. elektrisch untereinander verbunden sind.

5. Sonnenschirm nach mindestens einem der Ansprüche 1 bis 4,
dadurch gekennzeichnet,
daß die Solarzellen (1b) der Solarzellenstreifen (1a) durch eine gedruckte Schaltung o. dgl. mit wenigstens einem Energiespeicher (4) elektrisch leitend verbunden sind.

6. Sonnenschirm nach mindestens einem der Ansprüche 1 bis 5,
dadurch gekennzeichnet,
daß die Solarzellenstreifen (1a) wasserdicht miteinander verbunden sind.

7. Sonnenschirm nach mindestens einem der Ansprüche 1 bis 6,
dadurch gekennzeichnet,
daß zwischen zwei Solarzellenstreifen (1a) ein Streifen aus Markisenstoff (3b) vorgesehen ist, der mit den Solarzellenstreifen wasserdicht verbunden ist.

8. Sonnenschirm nach mindestens einem der Ansprüche 1 bis 7,
dadurch gekennzeichnet,
daß die Verbindung zwischen zwei nebeneinander angeordneten Solarzellenstreifen (1a) und/oder zwischen Solarzellenstreifen (1a) und Markisenstoffstreifen (3b) lösbar ausgebildet ist.

9. Sonnenschirm nach mindestens einem der Ansprüche 1 bis 8,
dadurch gekennzeichnet,
daß die Solarzellenstreifen (1a) an wenigstens einer Führungsschiene (7a) in Streifenrichtung gegeneinander verschiebbar angeordnet sind.

10. Sonnenschirm nach mindestens einem der Ansprüche 1 bis 9,
dadurch gekennzeichnet,
daß wenigstens ein Energiespeicher (4) und/oder eine Einrichtung zur Energieabnahme (6) im oder am Schirmständer-Rohr (2) angebracht ist.

11. Sonnenschirm nach mindestens einem der Ansprüche 1 bis 10,
dadurch gekennzeichnet,
daß wenigstens ein Energiespeicher (4) und/oder eine Einrichtung zur Energieabnahme (6) im oder am Fußsockel (2a) des Schirmständer-Rohres (2) angebracht ist.

12. Sonnenschirm nach mindestens einem der Ansprüche 1 bis 11,
dadurch gekennzeichnet,
daß wenigstens ein Energiespeicher (4) und/oder eine Einrichtung zur Energieabnahme (6) zwischen zwei Solarzellenstreifen (1a) vorgesehen ist.

13. Sonnenschirm nach mindestens einem der Ansprüche 1 bis 12,
dadurch gekennzeichnet,
daß die Solarzellen (1b) eine die Energieaufnahme nicht hindernde Schutzschicht aufweisen, welche wasserabweisend ist und/oder Abnutzung durch Reibeffekte verringert und/oder Schmutzteilchen weniger Halt gibt.

14. Sonnenschirm nach mindestens einem der Ansprüche 1 bis 13,
dadurch gekennzeichnet,
daß die Solarzellen (1b) durch eine Kühlflüssigkeit gekühlt werden.

15. Sonnenschirm nach mindestens einem der Ansprüche 1 bis 14,
dadurch gekennzeichnet,
daß eine manuelle Betätigungseinrichtung zum Auf- und Zusammenklappen des Schirmes vorgesehen ist.

16. Sonnenschirm nach mindestens einem der Ansprüche 1 bis 15,
dadurch gekennzeichnet,
daß im Schirmständer-Rohr (2) oder im Fußsockel (2a) des Schirmständer-Rohres (2) ein Motor (8) zum Auf- und Zusammenklappen des Schirmes vorgesehen ist.

17. Sonnenschirm nach Anspruch 16,
dadurch gekennzeichnet,
daß der Motor (8) durch Fernbedienung ein- und ausschaltbar ist.

18. Sonnenschirm nach Anspruch 16 oder 17,
dadurch gekennzeichnet,
daß ein Fingerabdrucksensor zum Betätigen der automatisch arbeitenden Betätigungsvorrichtung für den Motor (8) vorgesehen ist, der den Fingerabdruck wenigstens einer Person speichert.

19. Sonnenschirm nach mindestens einem der Ansprüche 16 bis 18,
dadurch gekennzeichnet,
daß ein scheckkartenähnlicher Schlüssel zum Betätigen der automatisch arbeitenden Betätigungsvorrichtung für den Motor (8) erforderlich ist.

20. Sonnenschirm nach mindestens einem der Ansprüche 16 bis 19,
dadurch gekennzeichnet,
daß eine aufgrund äußerer Einflüsse automatisch arbeitende Betätigungsvorrichtung vorgesehen ist.

21. Sonnenschirm nach mindestens einem der Ansprüche 1 bis 20,
dadurch gekennzeichnet,
daß er unterhalb der Solarzellenstreifen (1a) eine wärmespeichernde Bespannung (3) aufweist.

22. Sonnenschirm nach mindestens einem der Ansprüche 1 bis 21,
dadurch gekennzeichnet,
daß die Energiespeicher (4) von wenigstens zwei Sonnenschirmen miteinder und mit einem Zentralspeicher durch ein Kabel (10) verbunden sind, um diesem Speicher überschüssig erzeugte Energie der Solarzellenstreifen (1a) zuzuführen.

23. Sonnenschirm nach Anspruch 22,
dadurch gekennzeichnet,
daß durch die Kabelverbindung der Sonnenschirme untereinander die Möglichkeit gegeben ist, Telefongespräche zu führen.

24. Sonnenschirm nach mindestens einem der Ansprüche 1 bis 23,
dadurch gekennzeichnet,
daß am Außenrand der Sonnenschirmbespannung (1) ein herabhängender Volant (3a) vorgesehen ist, der für Werbelogos verwendbar ist.
